(19) **Europäisches Patentamt / European Patent Office / Office européen des brevets**

(11) **EP 4 679 361 A1**

(12) **EUROPEAN PATENT APPLICATION**

(43) Date of publication:
**14.01.2026 Bulletin 2026/03**

(21) Application number: **24187843.8**

(22) Date of filing: **10.07.2024**

(51) International Patent Classification (IPC):
**G06T 7/00** (2017.01)

(52) Cooperative Patent Classification (CPC):
**G06T 7/0004;** G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventor: **Wang, Jiayi
32425 Minden (DE)**

(54) **A DEVICE AND A COMPUTER IMPLEMENTED METHOD FOR DIGITAL IMAGE PROCESSING**

(57)     Computer implemented method for digital image processing, comprising determining (304) a synthetic digital image with a text to image diffusion depending on an input ($z_0$) that represents a digital image ($x$), depending on a noise sample ($\varepsilon_t$), and depending on an embedding ($y$) that represents the text, wherein the text to image diffusion comprises a forward diffusion process to determine a noisy latent ($z_t$) depending on the input and the noise sample, wherein the noisy latent ($z_t$) is parametrized by parameters ($\Phi$), wherein the text to image diffusion comprises a backward denoising process to determine an output that represents the synthetic digital image depending on a linear combination of the noisy latent ($z_t$) and predicted noise ($\varepsilon_\theta$), wherein the synthetic digital image comprises pixels, wherein the method comprises determining (306) for at least one pixel a magnitude of a gradient ($\nabla_\Phi L(\Phi)$) with respect to the parameters ($\Phi$) of a difference between the predicted noise ($\varepsilon_\theta$) for the pixel and the noise sample ($\varepsilon_t$) for the pixel, in particular a difference weighted by a weight that is variable.

Fig. 2

**Description**

Background

The invention relates to a device and a computer implemented method for digital image processing.

Stabel Diffusion and ControlNet may be used to create a synthetic digital image from text and a given digital image. The quality of the synthetic digital image may be confirmed using automated text-image alignment metrics.

High-Resolution Image Synthesis with Latent Diffusion Models (arXiv:2112.10752) discloses Stable Diffusion. Adding Conditional Control to Text-to-Image Diffusion Models (arXiv:2302.05543) discloses ControlNet. DreamFusion: Text-to-3D using 2D Diffusion (arXiv:2209.14988) discloses a Score Distillation Sampling loss for text-to-3D synthesis. If at First You Don't Succeed, Try, Try Again: Faithful Diffusion-based Text-to-Image Generation by Selection (arXiv:2305.13308) discloses an automated text-image alignment metric.

Disclosure of the invention

A computer implemented method for digital image processing, comprises determining a synthetic digital image with a text to image diffusion depending on an input that represents a digital image, depending on a noise sample, and depending on an embedding that represents the text, wherein the text to image diffusion comprises a forward diffusion process to determine a noisy latent depending on the input and the noise sample, wherein the noisy latent is parametrized by parameters, wherein the text to image diffusion comprises a backward denoising process to determine an output that represents the synthetic digital image depending on a linear combination of the noisy latent and predicted noise, wherein the synthetic digital image comprises pixels, wherein the method comprises determining for at least one pixel a magnitude of a gradient with respect to the parameters of a difference between the predicted noise for the pixel and the noise sample for the pixel, in particular a difference weighted by a weight that is variable. The method automatically indicates with the magnitude natural and unnatural looking artifacts in the synthetic digital image.

The backward denoising process may comprise determining step-wise successive linear combinations, wherein the noisy latent of a step is the result of the linear combination of the noisy latent and the predicted noise of the previous step, wherein the method comprises step-wise determining the magnitude of the gradient, and determining a metric depending on the step-wise determined magnitudes, in particular an average, an argmax, a mean, or a variance of the step-wise determined magnitudes. The metric provides pixel-wise feedback to identify a pixel either as artefact or not based on the magnitude that is determined for this pixel.

The method may comprise providing a threshold for the metric, and sorting out the synthetic digital image in case the metric exceeds the threshold. This automatically sorts out the synthetic digital image as comprising an artefact in case the metric exceeds the threshold.

The method may comprise determining the magnitude pixel-wise for a plurality of pixels of the synthetic digital image, and outputting an error heat map that visualizes the metric pixel-wise. The heat map depicts or explains the location of artefacts in the synthetic digital image.

The method may comprise determining the metric pixel-wise for a plurality of pixels of the synthetic digital image, wherein the metrics are associated with the pixel of the plurality of pixels that the respective average is determined for, and wherein the method comprises determining a region of pixels of the synthetic digital image, in particular a bounding box, depending on the metrics. This means, the region that comprises at least one artefact is identified.

Determining the region may comprise identifying, depending on the metrics, the region that comprises pixels that are associated with a metric that is larger than the metric that pixels outside of the region are associated with.

Determining the region may comprise determining a mean and a variance of the metric, and determining the region that comprises the pixels that are associated with metrics that lie within the variance around the mean.

The method may comprise replacing the pixels in the synthetic digital image with random noise, determining another input for the text to image diffusion that represents the synthetic digital image comprising the random noise in the region, and determining another synthetic digital picture with the text to image diffusion depending on the other input, depending on another noise sample, and depending on the embedding that represents the text. This means the digital image is improved.

The method may comprise replacing pixels in the synthetic digital image to determine another synthetic digital image and the metrics for the other synthetic digital image until the metrics determined for the other synthetic digital image meet a condition. This means the digital image is improved until the desired condition, e.g. quality, is met.

The method may comprise determining with the text to image diffusion for different text embeddings that represent text describing an anomaly in a real world technical component, a plurality of synthetic digital images for training or testing an anomaly detection system to recognize an anomaly in a digital image of a real world component.

A device for digital image processing comprises at least one processor and at least one memory, wherein the at least one memory is configured to store instructions that are executable by the at least one processor, and that, when executed by the at least one processor, cause the device to execute the method.

A computer program for digital image processing comprises instructions that are executable by a computer, and that, when executed by the computer, cause the computer to execute the method.

Further advantageous embodiments are derived from the following description and the drawing. In the drawing:

Fig. 1    schematically depicts a device for digital image processing,

Fig. 2    schematically depicts an exemplary text to image diffusion,

Fig. 3    depicts a flowchart comprising steps of a method for digital image processing.

The digital image may be a video image, a radar image, a LiDAR image, an ultrasonic image, a motion image, or a thermal image.

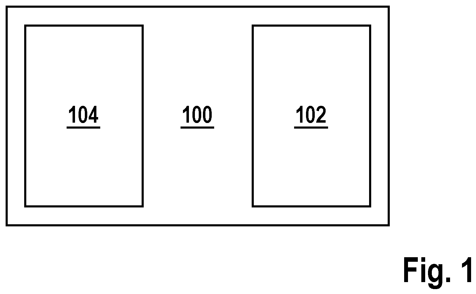

Figure 1 schematically depicts a device 100 for digital image processing.

The device 100 comprises at least one processor 102 and at least one memory 104.

The at least one processor 102 is configured to execute instructions that cause the device 100 to execute a method for digital image processing. The at least one memory 104 is configured to store the instructions. The at least one memory 104 may comprise transitory and/or non-transitory memory.

The device 100 may comprise a computer, that is configured to execute the instructions. A computer program for digital image processing may comprise the instructions.

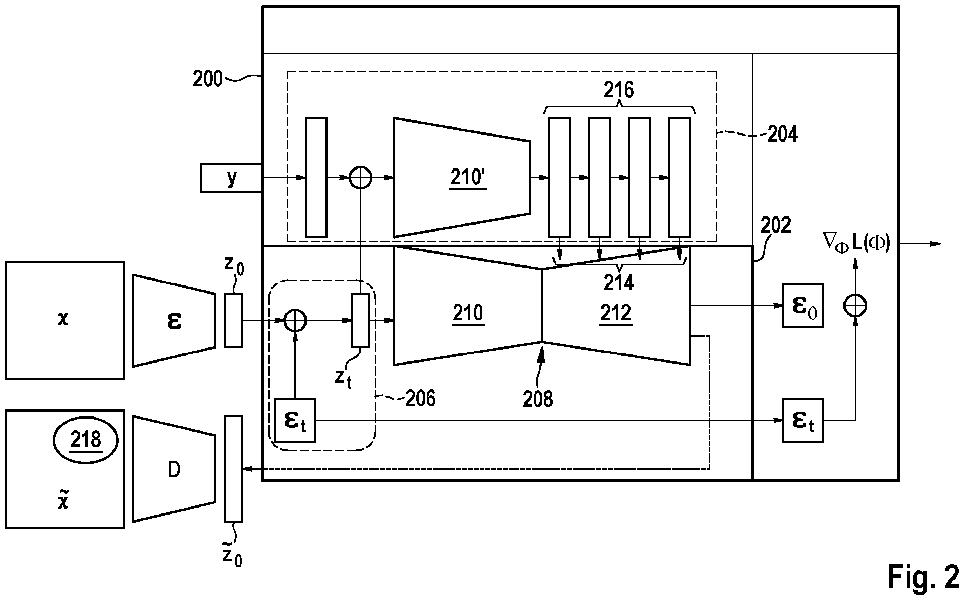

Figure 2 schematically depicts an exemplary text to image diffusion 200 on basis of a stable diffusion 202 and a control net 204.

The text to image diffusion 200 is for example implemented as an artificial neural network.

The text to image diffusion 200 operates in a latent space Z. The text to image diffusion 202 is based on an input $z_0$ in the latent space Z that represents a digital image x.

An encoder $\varepsilon$ is configured to determine the input $z_0$ representing the digital image x. The encoder $\varepsilon$ maps a given digital image x from image space into a spatial latent code $z_0 = \varepsilon(x)$. The encoder $\varepsilon$ may be implemented as part of the artificial neural network or as separate artificial neural network.

The text to image diffusion 200 is configured to determine a synthetic digital image $\tilde{x}$ depending on the input $z_0$, depending on a noise sample $\varepsilon_t$, and depending on an embedding y that represents the text.

The text to image diffusion 200 comprises, in the stable diffusion 202, a forward diffusion process 206 to determine a noisy latent $z_t$ in latent space Z depending on the input $z_0$ and the noise sample $\varepsilon_t$.

The noisy latent $z_t(\Phi)$ is parametrized by parameters $\Phi$.

The text to image diffusion 200 comprises in the stable diffusion 202, a backward denoising process 208 to determine an output $\tilde{z}_0$ in latent space Z that represents the synthetic digital image $\tilde{x}$.

The backward denoising process 208 comprises an encoder 210 and a decoder 212, e.g., a convolutional neural network according to the UNet architecture.

To consider the text in the text to image diffusion 200, the control net 204 comprises a trainable copy 210' of at least a part of the backward denoising process 208. For example, the control net 204 comprises a trainable copy of the encoder 210.

The control net 204 is configured to determine an input 214 for the backward denoising process 208.

The control net 204 is for example configured to determine the input 214 in a plurality of consecutive zero convolution layers 216. The control net 204 is for example configured to determine one input 214 per consecutive zero convolution layer 216.

The zero convolution layers are for example $1 \times 1$ convolution layers with both weight and bias initialized as zeros.

A decoder D is configured to determine the synthetic digital image $\tilde{x}$ depending on the output $\tilde{z}_0$. The decoder D may be implemented as part of the artificial neural network or as separate artificial neural network.

According to an example the decoder D maps a spatial latent code $\tilde{z}_0$ from the latent space Z to the synthetic digital image $\tilde{x} = D(\tilde{z}_0)$.

For example, the text to image diffusion 200 operates in the latent space Z of an autoencoder that comprises the encoder $\varepsilon$ and the decoder D.

The encoder $\varepsilon$ is and the decoder D are for example trained with a set of digital images to reconstruct a given image x:

$$\tilde{x} = D\big(\varepsilon(x)\big)$$

The stable diffusion 202 comprises multiple steps t to gradually add noise to the input $\tilde{z}_0$. In a step t, a noise sample $\varepsilon_t$, e.g., Gaussian noise, is sampled and added to the input $\tilde{z}_0$.

The forward diffusion process 206 for example comprises a Markov chain of length $T$ to gradually add the noise:

$$q(z_{t-1}|z_t) := N(z_t; \sqrt{1-\beta_t}z_{t-1}\beta_t I)$$

where $\{\beta_t\}_{t=0}^{T}$ represents a fixed variance schedule and $I$ is a unitiy matrix of appropriate size.

The noisy latent $z_t$ is for example computed in a closed form, e.g.:

$$z_t = \sqrt{\alpha_t}z_0 + \sqrt{1-\alpha_t}\epsilon, \epsilon \sim N(0,I)$$

where $\alpha_t := \prod_{s=1}^{t}(1-\beta_s)$ and $I$ is a unitiy matrix of appropriate size.

The backward denoising process 208 uses for example another Gaussian distribution

$$p_\theta(z_{t-1}|z_t) := N\big(z_{t-1}; \mu_\theta(z_t, t), \sigma_\theta(z_t, t)\big)$$

wherein $\mu_\theta(z_t, t)$ is expressed as a linear combination of $z_t$ and predicted noise $\varepsilon_\Theta(z_t, t)$. The predicted noise $\varepsilon_\Theta(z_t, t, y)$ is modeled for example by the UNet.

The output $\check{z}_0$ of the stable diffusion 202 is the prediction of the backward denoising process 208 at the last step $p_\theta$ $(\check{z}_0 | z_{T-(T-1)})$.

The stable diffusion 202 is for example trained in the latent space $Z$ to minimize the L2 norm of the noise prediction at a sampled step $t$:

$$L_n = E_{z \sim \mathcal{E}(x), \epsilon \sim N(0,I), t}\big[\|\epsilon - \epsilon_\Theta(z_t, t)\|^2\big]$$

The control net 204 is for example trained to minimize the L2 norm of the predicted noise $\varepsilon_\Theta(z_t, t, y)$ at a sampled time step $t$ conditioned on the embedding $y$ of the text:

$$L_n = E_{z \sim \mathcal{E}(x), \epsilon \sim N(0,I), t}\big[\|\epsilon - \epsilon_\Theta(z_t, t, y)\|^2\big]$$

The stable diffusion 202 is frozen during the training of the control net 204.

Training the neural network using the losses discussed previously optimizes the neural network so that the neural network can transform a noise sample $z_T$ to an output $\check{z}_0$ that represents the synthetic digital image $\check{x}$.

The latent $z_t(\Phi)$ in the step $t$ is parameterized by parameters $\Phi$.

In order to edit a given digital image $x$ depending on the text represented by the embedding $y$, a loss

$$L(\Phi) = E_{\epsilon \sim N(0,I), t}\left[\omega(t)(\epsilon_\theta(z_t(\Phi), t, y) - \epsilon)\frac{\partial z(\Phi)}{\partial \Phi}\right]$$

may be minimized to optimize the synthetic digital image $\check{x}$. The neural network is frozen for optimizing the synthetic digital image $\check{x}$. This means the latent code $z_t$ is directly optimized.

The loss $L(\Phi)$ itself is difficult to compute, however, the gradient

$$\nabla_\Phi L(\Phi) = E_{\epsilon \sim N(0,I), t}\left[\omega(t)(\epsilon_\theta(z_t(\Phi), t, y) - \epsilon)\frac{\partial z(\Phi)}{\partial \Phi}\right]$$

at the latent $z_t(\Phi)$ in the step $t$ parameterized by parameters $\Phi$ can be estimated using the predicted noise $\varepsilon_\Theta(z_t, t, y)$ predicted by the backward denoising process 208, e.g., the UNet, in the step $t$.

This means, the gradient estimate $\nabla_\Phi L(\Phi)$ for a given noise sample $\varepsilon_\theta(z_t(\Phi), t, y)$ and step $t$ is the scaled difference between the estimated and real noise $\varepsilon$.

The digital image $x$ and the synthetic digital image $\check{x}$ comprises pixels. The gradient $\nabla_\Phi L(\Phi)$ is a pixel-wise gradient.

This means, the gradient $\nabla_\Phi L(\Phi)$ comprises for a pixel a difference $(\varepsilon_\theta(z_t(\Phi),t,y) - \varepsilon)$ between the predicted noise $(\varepsilon_\theta(z_t(\Phi),t,y))$ for the pixel and the noise sample $(\varepsilon)$ for the pixel.

According to an example, the difference $(\varepsilon_\theta(z_t(\Phi),t,y) - \varepsilon)$ is weighted by a weight $\omega(t)$. The weight $\omega(t)$ is variable, i.e., different weights $\omega(t)$ may be used in different steps t.

The magnitude of the gradient $\nabla_\Phi L(\Phi)$ is higher in a region 218 that is likely to comprise an artifact. Thus, the region 218 is identifiable based on the magnitude of the gradient $\nabla_\Phi L(\Phi)$.

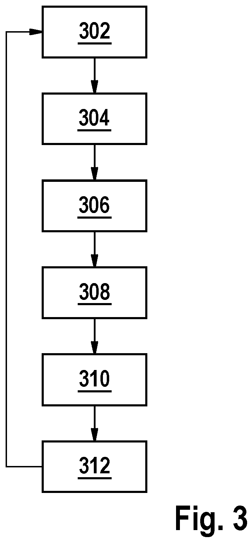

Figure 3 depicts a flowchart comprising steps of a method for digital image processing.

The method comprises a step 302.

The step 302 comprises providing a digital image x, a noise sample $\varepsilon$, and an embedding y that represents the text.

The method comprises a step 304.

The step 304 comprises determining a synthetic digital image $\tilde{x}$ with the text to image diffusion 200 depending on the input $z_0 = \Sigma(x)$ that represents the digital image x, depending on the noise sample $\varepsilon$, and depending on the embedding y that represents the text.

The step 302 or the step 304 may comprise providing the input $z_0 = \varepsilon(x)$.

The text to image diffusion comprises the forward diffusion process 202 to determine the respective noisy latent $z_t$ depending on the input $z_0$ and the noise sample $\varepsilon$. The noisy latent $z_t(\Phi)$ is parametrized by parameters $(\Phi)$.

The text to image diffusion 200 comprises the backward denoising process 204 to determine the output $\tilde{z}_0$ that represents the synthetic digital image $\tilde{x}$ depending on the respective predictions

$$p_\theta(z_{t-1}|z_t) := N\big(z_{t-1}; \mu_\theta(z_t,t), \sigma_\theta(z_t,t)\big)$$

This means, the output $\tilde{z}_0$ is determined depending on a linear combination of the noisy latent $z_t$ and predicted noise $\varepsilon_\theta(z_t, t,y)$.

The synthetic digital image comprises pixels.

The method comprises a step 306.

The step 306 comprises determining for at least one pixel of the synthetic digital image $\tilde{x}$ a magnitude of the gradient with respect to the parameters $\Phi$ of the difference $\varepsilon_\theta(z_t(\Phi),t,y) - \varepsilon$ between the predicted noise $\varepsilon_\theta(z_t(\Phi),t,y)$ for the pixel and the noise sample $\varepsilon$ for the pixel.

The difference may be the difference $\varepsilon_\theta(z_t(\Phi),t, y) - \varepsilon$ weighted by the weight $\omega(t)$ that is variable.

For example, the pixel-wise gradient

$$\nabla_\Phi L(\Phi) = E_{\epsilon \sim N(0,I),t}\left[\omega(t)(\epsilon_\theta(z_t(\Phi),t,y) - \epsilon)\frac{\partial z(\Phi)}{\partial \Phi}\right]$$

is determined, wherein E is the expectancy value. A larger magnitude of the gradient indicates a poorer quality of the estimated pixel.

The backward denoising process 208 comprises determining step-wise successive linear combinations, wherein the noisy latent $z_{t-1}$ of a step $(t - 1)$ is the result of the linear combination of the noisy latent $z_t$ and the predicted noise $\varepsilon_\theta(z_t, t, y)$ of the previous step $t$.

The step 306 may comprise step-wise determining the magnitude of the gradient, and determining an average of the step-wise determined magnitudes.

The average is an example for a metric. The metric may be the result of an argmax operation performed on the magnitudes of the gradients of the pixels. The metric may be the mean of the magnitudes of the gradients of the pixels. The metric may be the variance in the magnitudes of the gradients of the pixels.

The step 306 may comprise determining the magnitude pixel-wise for a plurality of pixels of the synthetic digital image $\tilde{x}$.

The step 306 may comprise determining the metric pixel-wise for a plurality of pixels of the synthetic digital image. The metrics are for example associated with the pixel of the plurality of pixels that the respective metric is determined for.

The method may comprise a step 308.

The step 308 may comprise providing a threshold for the metric, and sorting out the synthetic digital image in case the metric exceeds the threshold. The threshold may be a value of the metric that indicates a quality of the synthetic digital image that is too low for sorting out synthetic digital images with poor quality.

The step 308 may comprise outputting an error heat map that visualizes the metric pixel-wise.

The step 308 may comprise determining a region 218 of pixels of the synthetic digital image $\tilde{x}$, in particular a bounding box, depending on the metrics.

Determining the region may comprise identifying, depending on the metrics, the region that comprises pixels that are associated with a metric that is larger than the metric that pixels outside of the region are associated with.

Determining the region may comprise determining a mean and a variance of the metrics, and determining the region that comprises the pixels that are associated with metrics that lie within the variance around the mean.

The method may comprise a step 310.

The step 310 comprises replacing the pixels in the synthetic digital image $\bar{x}$ with random noise. Step 310 for example comprises replacing pixels in the synthetic digital image $\bar{x}$ to determine another synthetic digital image. The step 310 comprises replacing the pixels of the region in the synthetic digital image $\bar{x}$.

The method may comprise a step 312.

The step 312 comprises determining another input for the text to image diffusion that represents the synthetic digital image comprising the random noise in the region.

After step 312, the method may continue with the step 304 for determining another synthetic digital picture with the text to image diffusion 200 depending on the other input, depending on another noise sample, and depending on the embedding $y$ that represents the text.

The method for example comprises replacing the pixels in the synthetic digital image determined with the text to image diffusion 200 to determine another synthetic digital image and determining the metrics for the synthetic digital image repeatedly until the metrics determined for the synthetic digital image meet a condition.

The condition may be that a value of the metric is less than a threshold that indicates a sufficiently high quality of the synthetic digital image.

The text to image diffusion 200 may be trained and used for the purpose of anomaly detection in real images.

The digital image $x$ may be a digital image of a real world technical component. The text may be a description of an anomaly in the real world technical component that should be depicted in the synthetic digital image $\bar{x}$. The text diffusion model 200 may be trained on a restricted image domain comprising digital images of real world technical components from the domain.

The synthetic digital image is for example determined for the purpose of anomaly detection. The region or the error heatmap is for example determined for the purpose of sorting out the synthetic digital image in case the error heatmap or the magnitude of the gradient in the region indicates that the synthetic digital image is unusable for a training set for training or testing an anomaly detection system, e.g. a machine learning system, with the synthetic digital image for anomaly detection.

**Claims**

1. Computer implemented method for digital image processing, **characterized by** determining (304) a synthetic digital image with a text to image diffusion (200) depending on an input ($z_0$) that represents a digital image ($x$), depending on a noise sample ($\varepsilon_t$), and depending on an embedding ($y$) that represents the text, wherein the text to image diffusion (200) comprises a forward diffusion process (206) to determine a noisy latent ($z_t$) depending on the input and the noise sample, wherein the noisy latent ($z_t$) is parametrized by parameters ($\Phi$), wherein the text to image diffusion (200) comprises a backward denoising process (208) to determine an output that represents the synthetic digital image ($\bar{x}$) depending on a linear combination of the noisy latent ($z_t$) and predicted noise ($\varepsilon_\theta$), wherein the synthetic digital image comprises pixels, wherein the method comprises determining (306) for at least one pixel a magnitude of a gradient ($\nabla_\Phi L(\Phi)$) with respect to the parameters ($\Phi$) of a difference between the predicted noise ($\varepsilon_\theta$) for the pixel and the noise sample ($\varepsilon_t$) for the pixel, in particular a difference weighted by a weight that is variable.

2. The method according to claim 1, **characterized in that** the backward denoising process comprises determining step-wise successive linear combinations, wherein the noisy latent ($z_{t-1}$) of a step is the result of the linear combination of the noisy latent ($z_t$) and the predicted noise ($\varepsilon_\theta$) of the previous step ($t$), wherein the method comprises step-wise determining (306) the magnitude of the gradient, and determining a metric depending on the step-wise determined magnitudes, in particular an average, an argmax, a mean, or a variance of the step-wise determined magnitudes.

3. The method according to claim 2, **characterized in that** the method comprises providing (308) a threshold for the metric, and sorting out the synthetic digital image in case the metric exceeds the threshold.

4. The method according to one of the claims 2 or 3, **characterized in that** the method comprises determining (306) the magnitude pixel-wise for a plurality of pixels of the synthetic digital image, and outputting (308) an error heat map that visualizes the metric pixel-wise.

5. The method according to one of the claims 2 to 4, **characterized in that** the method comprises determining (306) the metric pixel-wise for a plurality of pixels of the synthetic digital image ($\bar{x}$), wherein the metrics are associated with the pixel of the plurality of pixels that the respective metric is determined for, and wherein the method comprises determining (308) a region (218) of pixels of the synthetic digital image, in particular a bounding box, depending on the metrics.

6.  The method according to claim 5, **characterized in that** determining (308) the region (218) comprises identifying, depending on the metrics, the region that comprises pixels that are associated with a metric that is larger than the metric that pixels outside of the region are associated with.

7.  The method according to claim 5, **characterized in that** determining (308) the region (218) comprises determining a mean and a variance of the metrics, and determining the region that comprises the pixels that are associated with metrics that lie within the variance around the mean.

8.  The method according to one of the claims 5 to 7, **characterized in that** the method comprises replacing (310) the pixels in the synthetic digital image ($\bar{x}$) with random noise, determining (312) another input for the text to image diffusion that represents the synthetic digital image comprising the random noise in the region, and determining (304) another synthetic digital picture with the text to image diffusion depending on the other input, depending on another noise sample, and depending on the embedding ($y$) that represents the text.

9.  The method according to claim 8, **characterized in that** the method comprises replacing (310) pixels in the synthetic digital image ($\bar{x}$) to determine another synthetic digital image and the metrics for the other synthetic digital image until the metrics determined for the other synthetic digital image meet a condition.

10. The method according to one of the preceding claims, **characterized by** determining with the text to image diffusion (200) for different text embeddings that represent text describing an anomaly in a real world technical component, a plurality of synthetic digital images for training or testing an anomaly detection system to recognize an anomaly in a digital image of a real world component.

11. A device (100) for digital image processing, **characterized in that** the device (100) comprises at least one processor (102) and at least one memory (104), wherein the at least one memory (104) is configured to store instructions that are executable by the at least one processor (102), and that, when executed by the at least one processor (102), cause the device (100) to execute the method according to one of the claims 1 to 10.

12. A computer program for digital image processing, **characterized in that** the computer program comprises instructions that are executable by a computer, and that, when executed by the computer, cause the computer to execute the method according to one of the claims 1 to 10.

**Fig. 1**

Fig. 2

```
        ┌──────────┐
    ┌──→│   302    │
    │   └────┬─────┘
    │        ↓
    │   ┌──────────┐
    │   │   304    │
    │   └────┬─────┘
    │        ↓
    │   ┌──────────┐
    │   │   306    │
    │   └────┬─────┘
    │        ↓
    │   ┌──────────┐
    │   │   308    │
    │   └────┬─────┘
    │        ↓
    │   ┌──────────┐
    │   │   310    │
    │   └────┬─────┘
    │        ↓
    │   ┌──────────┐
    └───│   312    │
        └──────────┘
```

Fig. 3

Europäisches
Patentamt

European
Patent Office

Office européen
des brevets

# EUROPEAN SEARCH REPORT

**Application Number**

EP 24 18 7843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOSEPH ZHU ET AL: "HiFA: High-fidelity Text-to-3D with Advanced Diffusion Guidance", ARXIV.ORG, CORNELL UNIVERSITY LIBRARY, 201 OLIN LIBRARY CORNELL UNIVERSITY ITHACA, NY 14853, 30 May 2023 (2023-05-30), XP091523539, | 1,11,12 | INV. G06T7/00 |
| A | * abstract * <br> * figure 5 * <br> * sections 3, 4.1 * <br> ----- | 2-10 | |
| X | JAKAB TOMAS ET AL: "Farm3D: Learning Articulated 3D Animals by Distilling 2D Diffusion", 2024 INTERNATIONAL CONFERENCE ON 3D VISION (3DV), IEEE, 18 March 2024 (2024-03-18), pages 852-861, XP034617883, DOI: 10.1109/3DV62453.2024.00051 [retrieved on 2024-06-12] * abstract * <br> * figure 3 * <br> * sections 3.2, 3.4 * <br> ----- | 1,11,12 | |
| A | Hu Teng ET AL: "AnomalyDiffusion: Few-Shot Anomaly Image Generation with Diffusion Model", , 22 February 2024 (2024-02-22), XP093235300, DOI: 10.1609/aaai.v38i8.28696 Retrieved from the Internet: URL:https://arxiv.org/abs/2312.05767 * abstract * <br> * figures 1,2,5 * <br> * section 3 * <br> ----- <br> -/-- | 1-12 | |

| | TECHNICAL FIELDS SEARCHED (IPC) |
|---|---|
| | G06T |

The present search report has been drawn up for all claims

| Place of search | Date of completion of the search | Examiner |
|---|---|---|
| Munich | 18 December 2024 | Eveno, Nicolas |

EPO FORM 1503 03.82 (P04C01)

Europäisches
Patentamt

European
Patent Office

Office européen
des brevets

**EUROPEAN SEARCH REPORT**

**Application Number**

EP 24 18 7843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BEN POOLE ET AL: "DreamFusion: Text-to-3D using 2D Diffusion", ARXIV.ORG, CORNELL UNIVERSITY LIBRARY, 201 OLIN LIBRARY CORNELL UNIVERSITY ITHACA, NY 14853, 29 September 2022 (2022-09-29), XP091330020, * section 2 *<br>----- | 1-12 | |

TECHNICAL FIELDS
SEARCHED       (IPC)

The present search report has been drawn up for all claims

| Place of search | Date of completion of the search | Examiner |
|---|---|---|
| Munich | 18 December 2024 | Eveno, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)